# EUROPEAN PATENT SPECIFICATION

(11) **EP 4 638 234 B1**
(45) Date of publication and mention of the grant of the patent: **15.04.2026**
(21) Application number: 23798251.7
(22) Date of filing: 31.10.2023
(51) Int. Cl.: B62B 3/00, B62B 5/00

(54) **REMOTE-CONTROLLED PERSONAL CART SYSTEM FOR TRANSPORTING ITEMS**
FERNGESTEUERTES PERSONENWAGENSYSTEM ZUM TRANSPORT VON GEGENSTÄNDEN
SYSTÈME DE CHARIOT PERSONNEL TÉLÉCOMMANDÉ POUR LE TRANSPORT D'ARTICLES

(30) Priority: 21.12.2022 EP 22215245
(43) Date of publication of application: 29.10.2025
(73) Proprietor: Shop-E One OÜ, 10128 Tallinn (EE)
(72) Inventor: WAGNER, Marc, 10128 Tallinn (EE)
(74) Representative: Moosedog Oy
(86) International application number: PCT/EP2023/080376
(87) International publication number: WO 2024/132277

(56) References cited:
- KR-A- 20190 031 078
- US-A1- 2013 098 700
- US-A1- 2014 107 868
- US-A1- 2018 057 034
- US-A1- 2021 331 729

## Description

### TECHNICAL FIELD

The present invention relates to remote-controlled personal cart systems for transporting items.

### BACKGROUND

With the advancement in technology, the shopping styles of people have been changing rapidly. For example, the Covid-19 quarantines led to an increase in sedentary or isolated lives. Moreover, during such times both physical activities and the mental health of the people were badly affected. Nowadays, people are facing challenges and a lack of motivation in completing daily tasks such as running errands for food and basic needs thereof.

Conventionally, the people used to carry a bag while going shopping (such as grocery shopping) for carrying a purchased product. The purchased product when carried in the bag increases the weight of the bag, thereby making it difficult to be carried home without a car. Moreover, vulnerable people such as elderly people and handicapped people might find a trouble to carry even a few purchased products from one place to another.

Normally, the people use a shopping cart, lead the fully packed shopping cart to a parking lot and load all the purchased products into the car. However, many times driving the car is uneconomical. In recent times, people have started using e-commerce platforms that employ a courier service for shopping. However, such practices are expensive and are not preferred by people who are living an active lifestyle. Moreover, such practices fail to resolve other societal issues such as loneliness, autonomy, physical, and mental health of the people. Typically, a shopping trolley bag is used. However, the shopping trolley bag requires to be pushed or pulled by applying physical force, thereby making it inconvenient for use.

Additionally, some industries (such as restaurants, logistic providers and healthcare) employ a robot for delivering the purchased products to the desired location. However, such robots need to be trained and are uncontrollable between a large group of people. Moreover, such robots fail to move on complicated surfaces. Furthermore, some autonomous devices are used for carrying the purchased products over short distances. However, such autonomous devices are a complicated and expensive technology. Also, a separate legislation is necessary for autonomous devices and therefore autonomous devices are not allowed in many countries.

Patent document US2018057034 discloses a device enabling dynamic vehicle control by continuously re-centering the vehicle relative to the user's position.

Patent document US2013098700 discloses a foldable cart assembly which is designed to autonomously follow a user across a field by utilizing a user tracking system.

Patent document US2021331729 introduces a hands-free, voice-controlled electric utility cart that autonomously follows the user by tracking a wearable electronic device.

Patent document KR20190031078 discloses a carrier which features a simple and cost-effective design that enables autonomous movement by tracking the owner's position.

Patent document US2014107868 discloses acontainer with a propelling system that can be controlled remotely, and a sensor system to help to navigate the container

Furthermore, the devices known from the prior art are normally rather large, bulky, and heavy, which makes it difficult to lift and store these devices. Normally, the devices known from the prior art cannot be easily and quickly taken into separate parts, neither are these devices easily collapsible.

The devices known from prior art are configured only for flat surfaces and get stuck or may fall over, while driving on an uneven road. Furthermore, such devices are normally not configured to climb small heights like curbstones.

### SUMMARY

The present invention seeks to provide a remote-controlled personal cart systems for transporting items. An aim of the present invention is to provide a solution that overcomes the problems encountered in prior art.

The present invention provides a remote-controlled personal cart system for transporting items, the remote-controlled personal cart system comprising
- a cart comprising
   - a base comprising
      - at least four wheels comprising at least two driving wheels on the front and at least two back wheels,
      - a battery,
      - a receiver,
      - at least one motor, and
      - at least one sensor system operable to detect obstacles;
   - a basket detachably placed on the base, the basket comprising an empty space configured to accommodate the items; and
- a remote-control device for controlling a movement and a speed (v1) of the cart, the remote-control device comprising a transmitter and at least one sensor element operable to measure a distance (L) between the remote-control device and the cart,

and wherein the remote-control device is operable to control the speed of the cart to keep the distance (L) within a range from 1 meter up to 3 meters during the movement of the cart
characterized in that the cart further comprises a back sliding system between the at least two back wheels, the sliding system being configured to support the cart, when driving on an uneven ground.

Embodiments of the present invention substantially eliminate or at least partially address the aforementioned problems in the prior art and enable the transportation of items in a fast and efficient manner using the remote-controlled personal cart system. Moreover, the system is user-friendly and can be used by all sorts of users irrespective of age and physical condition thereof. Furthermore, the system promotes pedestrian mobility, independence and autonomy, thereby addressing a public health concern. Additionally, the system is robust, cost-effective and environmentally friendly.

Additional aspects, advantages, features and objects of the present invention would be made apparent from the drawings and the detailed description of the illustrative embodiments construed in conjunction with the appended claims that follow.

It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present invention, exemplary constructions of the disclosure are shown in the drawings. However, the present invention is not limited to specific methods and instrumentalities disclosed herein. Moreover, those skilled in the art will understand that the drawings are not to scale. Wherever possible, like elements have been indicated by identical numbers. Embodiments of the present disclosure will now be described, by way of example only, with reference to the following diagrams wherein:
FIG 1 is a schematic illustration of a remote-controlled personal cart system for transporting items, in accordance with different embodiments of the present invention;
FIG 2 is a schematic illustration of a bottom view of a base of a remote-controlled personal cart system for transporting items.
FIG 3 is a schematic illustration of a base and a basket of a remote-controlled personal cart system for transporting items.
FIG 4 is a schematic illustration of a back sliding system of a a remote-controlled personal cart system for transporting items;
FIG 5 is a schematic illustrations of a cart of a remote-controlled personal cart system for transporting items, in accordance with different embodiments of the present invention;
FIGs. 6A, 6B are side views of a cart of a remote-controlled personal cart system for transporting items;
FIG 7 is a schematic illustration of a remote-control device of a remote-controlled personal cart system for transporting items;
FIG 8 is a schematic illustrations of a cart of a remote-controlled personal cart system with lifting handles;
FIG 9 is a schematic illustrations of a cart of a remote-controlled personal cart system comprising one or more brushes inside wheels wells.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practicing the present invention are also possible.

The present invention provides a remote-controlled personal cart system for transporting items, the remote-controlled personal cart system comprising
- a cart comprising
   - a base comprising
      - at least four wheels comprising at least two driving wheels on the front and at least two back wheels,
      - a battery,
      - a receiver,
      - at least one motor, and
      - at least one sensor system operable to detect obstacles;
   - a basket detachably placed on the base, the basket comprising an empty space configured to accommodate the items; and
- a remote-control device for controlling a movement and a speed (v1) of the cart, the remote-control device comprising a transmitter and at least one sensor element operable to measure a distance (L) between the remote-control device and the cart,

and wherein the remote-control device is operable to control the speed of the cart to keep the distance (L) within a range from 1 meter up to 3 meters during the movement of the cart
characterized in that the cart further comprises a back sliding system between the at least two back wheels, the sliding system being configured to support the cart, when driving on an uneven ground.

The present invention provides the aforementioned remote-controlled personal cart system. It will be appreciated that the system is user-friendly and possesses a simple design. Moreover, the system can operate smoothly on both even and uneven surfaces. Furthermore, the system is environmentally friendly. Beneficially, the system employs at least one sensor for preventing accidents thereof. Advantageously, the system employs a remote control device for controlling a movement thereof accurately. Furthermore, the remote-controlled personal cart system is sustainable and reduces the carbon footprint. It will be appreciated that the system is more effective than the conventional modes of transportation. Beneficially, the system is used for micro-mobility and covering short-range distances.

The term *"remote-controlled personal cart"* as used herein refers to a robot that is controlled from a distance using a hardware device (such as a transmitter) by a user. The user may be an operator of the system, an owner of the system, a vulnerable person, an elderly, a handicapped person, or any other person using the system. It will be appreciated that the remote-controlled personal cart is overseen by the user who could always step in to take over control at any time remotely, thus negating any potential safety concerns. In this regard, the remote-controlled personal cart system includes various components (such as cart, base, remote control device, and so forth) that work in conjunction with each other for transporting the items. In an example, the remote-controlled personal cart system can be used for various applications such as shopping, hospitality, healthcare, and so forth. In this regard, the user may use the remote-controlled personal cart system for carrying various items while going shopping. Herein, the term item refers to any object that is required to be transported. For example, the item is a deliverable ordered by the user pursuant to a specific purchase. Optionally, the item is any belonging such as a shopping bag of the user. Optionally, the item is a grocery item such as bottles, flour packs, cans, and so forth.

The term *"cart"* as used herein refers to a wagon that is used for carrying a load from one place to another. The cart has a definite shape such as a cuboidal shape, a cubicle shape, a trapezoidal shape, a spherical shape, and so forth. In an example, the cart has a cuboidal shape. Moreover, the cart has a definite size. Optionally, the size of the cart is customized based on an application thereof. Optionally, the cart is fabricated in three standard sizes such as small, medium and large. Optionally, the small size cart has a length of 45 cm, a width of 35 am and a height of 35 cm. Optionally, the medium size cart has a length of 70 cm, a width of 55 cm and a height of 55 cm. Optionally, the large size cart has a length in a range of 90cm to 100 cm, a width in a range of 70 cm to 80 cm and a height in a range of 70 cm to 80 cm. For example, when the cart has the cuboidal shape then the length of the cart is from 0.6 meters (m) up to 1 m, breadth of the cart is from 0.6 m up to 1 m and a height of the cart is from 0.15 m up to 0.8 m. Furthermore, the cart may carry a load of up to 60 kilograms (kg). Optionally, the cart is a shopping cart. Optionally, the cart may be used at home, a hospital, a restaurant, a hotel, an office, a workshop, and so forth. It will be appreciated that the cart is compact in size. Moreover, the compact size of the cart makes it efficient to carry a personal payload.

The cart comprises a base that is arranged at the bottom portion of the cart. The term *"base"* as used herein refers to a chassis or a load-bearing framework of the cart. In this regard, the base provides structural support to the cart in the construction and function thereof. Moreover, the base includes several components that are arranged thereon. It will be appreciated that the said components work in conjunction with each other to provide power to the system.

The base comprises at least four wheels comprising at least two driving wheels on the front and at least two back wheels. In this regard, the cart comprises four wheels such that the two wheels are arranged at the front and the remaining two are arranged at the back of the cart. It will be appreciated that the at least two wheels on the front are drive wheels. The drive wheel transmits force, transforming torque into tractive force from the at least two wheels on the front to the road, thereby causing the system to move forwards or backward. Optionally, the at least four wheels are drive wheels. Advantageously, the at least four wheels possess a large diameter in order to drive smoothly on rough pedestrian ways. Optionally, the diameter of the wheels lies in a range between 7.2 cm to 12 cm. Optionally, the diameter of the wheels is customized based on the size of the cart. Beneficially, the at least four wheels are used to keep the cart stable and operable on various urban terrains. Moreover, presence of the at least four wheels keeps the design of the cart simple such that the cart could move easily in populated spaces. Furthermore, each of the at least four wheels is suitable for driving on different road surfaces under varying climate conditions.

Optionally, the at least four wheels are exchangeable. In this regard, each of the at least four wheels could be changed based on a condition (such as wear and tear) thereof. Optionally, the at least four wheels comprises solid tires in order to prevent thereof from puncturing. Moreover, the at least four wheels enable the cart to be in contact with the surface. It will be appreciated that the at least four wheels are durable and possess an optimum grip. Furthermore, each of the at least four wheels could be changed based on a weather condition or the surface thereof.

In an embodiment, the at least four wheels are at least partially located inside wheels wells comprised in the base and wherein the wheel wells comprise one or more brushes configured to clean the at least four wheels during the movement of the cart. The one or more brushes are cleaning the at least four wheels for example to remove dirt, water, snow, slob and other things that may get stuck on the at least four wheels and may negatively affect driving of the remote-controlled personal cart system. In snowy countries, the snow or slob tends to get stuck on the at least four wheels. Also, mud has an affect on the at least four wheels. Therefore, it is important to remove dirt, water, snow, slob and other things from the at least four wheels.

Optionally, the at least four wheels comprise a suspension system. The suspension system enables relative motion between the cart and the at least four wheels. The suspension system enables better manoeuvring on an uneven ground, for example on a cobble stone, forest trail, gravel road. Furthermore, the products in the cart won't be damaged while driving on the uneven ground due to shaking, as the suspension system stabilizes the shakiness. Furthermore, the suspension system enables to stabilize the cart on the base, while the remote-controlled personal cart system travels from a lower height to a higher hight, for example climbing on a curbstone, and vice versa.

The base comprises a back sliding system between the at least two back wheels, the sliding system being configured to support the cart, when driving on an uneven ground. It will be appreciated that the back sliding system is used to prevent the cart from falling over. The back sliding system is configured to support the cart from falling over, when the cart is driving on an uneven ground and/or when the cart is driving between different heights, like a sidewalk and a road. Advantageously, the back sliding system is used to enable the cart to climb an edge of a sidewalk smoothly or efficiently. The back sliding system serves as an extra support from falling over. The back sliding system is arranged between the at least two back wheels to keep the cart stable while climbing an obstacle such as a curbstone. In an embodiment, the back sliding system is located in the centre of the base between the at least two back wheels.

In an embodiment, a remote-controlled personal cart system comprises a front sliding system between the at least two front wheels, the front sliding system being configured to support the cart, when driving on an uneven ground. The front sliding system enables even more efficient stability, while driving or climbing an uneven ground or different heights. Furthermore, the front sliding system enables to use driving directions in both ways. With a front sliding system, the remote-controlled personal cart can climb different heights without a risk of falling over in both driving directions. Furthermore, the back sliding system and the front sliding system enables the remote-controlled personal cart system to climb different heights without a need of the front wheels being parallel with the height, but one of the front wheels can start climbing the height before the second front wheels without a risk of the cart falling over. In an embodiment, the back sliding system is located in the centre of the base between the at least two front wheels.

In an embodiment, at least one of the back sliding system and the front sliding system comprises a sliding wheel, which is smaller than the at least four wheels. The sliding wheel enables smooth movement of the remote-controlled personal cart system, while climbing different heights. The sliding wheel is smaller than the at least four wheels, as otherwise the cart may fall over on an uneven ground or while climbing different heights. In an embodiment, the sliding wheels may comprise of one or more sliding wheels, which are smaller than the at least four wheels.

In an embodiment, at least one of the back sliding system and the front sliding system is configured to retract while the cart is climbing up from a lower surface to an higher surface. In an embodiment, the back sliding system is a retractable back sliding system. Yet in another embodiment, the front sliding system is a retractable front sliding system. Retracting the at least one of the back sliding system and the front sliding system enables smoother transition while climbing different heights, for example, while driving up from a lower height to higher height, the front sliding system retracts and will not serve as an obstacle. The retractable back sliding system and/or the retractable front sliding system smoothly support the cart also while retracting, meaning that the retractable back sliding system and/or the retractable front sliding system keeps a connection and support on the uneven ground until a smooth retracting motion is finished. The retractable back sliding system and/or the retractable front sliding system smoothly retracts towards the base of the cart with a force applied from the uneven ground or different heights. When the force is removed, the retractable back sliding system and/or the retractable front sliding system restores its supporting position. Furthermore, the at least one of the back sliding system and the front sliding system may comprise a spring or a shocker system for retracting. The spring or the shocker system may be configured to retract the sliding wheels.

The base comprises a battery. The battery unit is a source of electric power, herein installed within the base of the cart for powering thereof. Optionally, the battery may be a 120 watt battery. It will be appreciated that the base comprises a single battery in order to keep the cart light. Optionally, the battery unit may be a primary battery unit and a secondary battery unit. The primary battery unit is designed to be used until it is exhausted of energy then discarded as the chemical reactions in the primary batteries are not reversible. The secondary battery unit may be recharged and used again multiple times as the chemical reactions therein may be reversed by applying electric current to the cell.

The system further comprises a charging station operable to charge the battery. Herein, the charging station refers to a charge point or a piece of equipment that supplies electrical power for charging plug-in electric vehicles. In this regard, the charging station supplies electrical power for charging the plugged-in cart. It will be appreciated that the charging station enables the efficient charging of the cart. Optionally, the charging station is an alternating current (AC) charging station or a direct current (DC) charging station. Optionally, the charging station is operable to charge the battery with the DC electric power, while most electricity is delivered from the power grid as the alternating current. In an embodiment, the charging station is configured as a docking station to enable a simple, hassle-free, and convenient charging.

Optionally, the cart further comprises solar panels. The term *"solar panel"* as used herein refers to an assembly of photovoltaic cells mounted in a framework for generating energy. In this regard, the solar panels are mounted on the cart. Moreover, the solar panels use sunlight as a source of energy to generate direct current electricity. Optionally, the solar panels is arranged on the sides of the cart or on the lids. It will be appreciated that the solar panels save the energy and could operate for long hours.

The base comprises a receiver. The term *"receiver"* as used herein refers to a hardware module or device that is used to receive signals from an external device. In this regard, the receiver is used to receive the signal from a remote control device. In an example, the receiver is used to decode a piece of transmitted information that is obtained from the received signal.

The base comprises at least one motor. Optionally, the motor is an electric motor that converts electrical energy into mechanical energy. Moreover, the electric motors can be powered by the batteries. Typically, the at least one motor produces a linear force or a rotary force i.e., torque intended to rotate the driving part, such as the input shaft (or shaft), coupled to it. Typically, the motors are efficient, lightweight, robust, mechanically simple and cheap to manufacture. Furthermore, the at least one motor can provide instant and consistent torque at any speed and can run on electricity generated by renewable sources and do not or negligibly contribute to greenhouse effect. It will be appreciated that the motor is adequate to drive the cart. Preferably, the base of the cart employs the single motor in order to keep down the noise level.

The base comprises at least one sensor system operable to detect obstacles. The term *"sensor system"* as used herein refers to a group of sensors that are used to sense and navigate an operating environment of the cart. In this regard, the operating environment may be measured, continuously or intermittently, during the transportation of the items. Optionally, the at least one sensor system is operatively coupled with a software module to provide the sensor data thereto. Moreover, the at least one sensor system is configured to detect the obstacles and avoid collision therewith. In an example, the obstacles include an object, a construction, a living being, and so forth. Examples of the object include stones, bricks, vehicles, pedestrian signals, and so forth. Examples of the construction include walls, pillars, and so forth. Examples of living beings include animals, plants, pedestrian traffic, and so forth. Furthermore, the at least one sensor system is configured to provide location information about the system. Advantageously, the at least one sensor system enables the cart to prevent collision thereof when the signals received from the receiver are delayed or not transmitted. Optionally, the at least one sensor system is used to estimate the condition (such as wear and tear) of the cart. Optionally, the at least one sensor system includes a light sensor, sound sensor, a temperature sensor, and so forth.

Optionally, the at least one sensor system comprises at least one lidar. In this regard, the at least one lidar, in operation, emit light beams into the environment where they are present and receive reflections of the light beams off surfaces of obstacles present in the environment. Then, the reflections of the light beams are processed to generate point cloud data. Examples of the at least one lidar could be, but are not limited to, airborne Lidars, topographic Lidars, bathymetric Lidars, and terrestrial Lidars. In an example, the at least one lidar is used for examining the surface of the road or the path covered by the remote-controlled personal cart system for transporting items. It will be appreciated that the surface of the road is examined to avoid collisions of the cart with the obstacles.

Optionally, the at least one sensor system comprises. at least one of selected from time-of-flight (ToF) sensor, RGB sensor. The term *"time-of-flight sensor"* as used herein refers to a sensor that is used for measuring a time taken by an artificial light signal provided by a laser or an LED to travel a distance through a medium. In this regard, the time-of-flight sensor is used for measuring the time taken by the artificial light signal to travel the distance from the cart to the obstacle. The term *"RGB sensor"* as used herein refers to a color model in which the red, green, and blue primary colors of light are added to create different colors that are perceived by the sensor. The RGB sensor is used to deliver colored images of the obstacles by capturing light in red, green, and blue wavelengths.

The cart comprises a basket detachably placed on the base, the basket comprising an empty space configured to accommodate the items. In this regard, the basket is used to store or carry the items therein. Optionally, the dimensions of the basket are such that the basket fits properly onto the cart. Optionally, the basket is used to carry at least one shopping bag. The detachable basket enables the remote-controlled personal cart system being more easily storable, as the remote-controlled personal cart system can be easily detached to separate pieces, which fit in limited spaces. The basket and the base may comprise means for locking the basket on the base. Optionally, the means for locking may be selected from an electromagnetic locking system, which would enable easy detaching and locking the basket on the base, while in use. Optionally, electromagnetic locking system keeps basket safely attached, while switched on and releases the basket, when the remote-controlled personal cart system is not switched on. In another embodiment, the basket may be attached to the based with at least one of selected from latches, screws, clips etc.

Optionally, the basket is a collapsible basket. The term *"collapsible basket"* as used herein refers to a foldable container that is used for carrying or storing objects. In this regard, the collapsible basket includes a bottom portion and a plurality of vertical sides or a plurality of walls. The number of vertical sides or walls depends on the shape of the basket. For example, a cuboidal-shaped basket may include four detachable or foldable walls and one bottom portion. Optionally, the collapsible basket is used to save some room while storing the objects. For example, the sides of the basket could be taken apart or the walls may be foldable. It will be appreciated that the collapsible basket reduces the size of the system, thereby making it easier to get stored.

In an embodiment, the basket being a collapsible basket and detachably placed on the base, a modularity concept is easily achieved, which enables to separate the base and the basket and also to store these separately. Furthermore, as the basket is collapsible, the remote-controlled personal cart system does not require a lot of space. For example, the remote-controlled personal cart system could easily be stored in an airplane carry-on luggage overhead bin or it also fits in small trunks.

In an embodiment, the base and or the basket cross section in top view have a rectangular shape with rounded edges. The rectangular shape makes the base and or the basket compact in size and gives also reasonable shape for storing. The base and or the basket cross section in top view having a rectangular shape with rounded edges together with the basket being detachable and collapsible enables the most reasonable and compact storing opportunities. The mentioned embodiment enables the remote-controlled personal cart system to be stored in very compact spaces.

Optionally, a material of the base and the basket comprises aluminium. In this regard, the base and the basket are fabricated using the aluminium material. Advantageously, the aluminium is a lightweight material, thus enables the cart to be lifted easily. Moreover, the aluminium is a durable material, thus makes the cart long-lasting. It will be appreciated that the aluminium material supports the cart to bear a heavy load. Optionally, the fabrication material of the base is a carbon steel to achieve a light-weight construction.

Optionally, the basket further comprises a handle and a screen operable to display an information about the detected objects. The term *"handle"* as used herein refers to a long metal bar or rod that is used for holding, carrying, or controlling a movement of the cart. In this regard, the handle may be a straight, circular, or a curled bar to enable handling of the cart. Optionally, the handle may have a polygonal shape such as a rounded-cuboidal shape, rounded-hexagonal shape, rounded-prism shape, and so forth. Optionally, the handle may be engraved with a knurled crosshatch pattern to enable users to maintain a solid grip. Moreover, the handle comprises an upper end and a lower end. The handle and the basket are supported by the base of the cart such that the handle is arranged in an upright position with respect to the surface. The base of the cart is mounted to the at least one wheels that allow the cart to move relative to the surface. Optionally, the handle is a retractable handle. The retractable handle is a collapsible handle such as a telescopic handle that could be extended and retracted from the back of the basket. In this regard, the retractable handle includes an internal mechanism that requires the handle to be pulled against a spring in order for an adjustment to take place, and once the adjustment is completed, the retractable handle locks into a rest position. Advantageously, the retractable handle increases the compactness of the cart.

The term *"screen"* as used herein refers to a flat panel on an electronic device on which images and information are displayed. In this regard, the screen is mounted on the upper end of the handle. The information includes a list of items or the objects present inside the basket. It will be appreciated that the screen eliminates the need of checking or counting the objects present in the basket manually. In an example, the screen makes it easier for the user to watch, which items are present in the basket without the need of looking into the basket. Optionally, the screen is used to display the total number of objects that are detected inside the basket, discount on the detected objects and a total bill amount of the detected objects. Furthermore, reduces the time that is required while the billing stage of the shopping.

The system further comprises a detector attached to the basket, the detector being operable to detect the objects inside the basket. The term *"detector"* as used herein refers to a device that is used to detect the presence of a particular object or substance. In this regard, the detector is operatively coupled to the basket for recognizing, counting and invoicing all the objects that are present inside the basket of the cart. Optionally, the detector is operatively coupled to the screen. Optionally, the detector is used for sending the information regarding the detected objects to the screen. Beneficially, the detector eliminates the need of laying all the purchased items on a cash register counter, thus saving the time of the user and the seller. Moreover, the detector and the screen work in conjunction with each other to prevent errors that occur during the billing of the detected objects.

The term *"remote-control device"* as used herein refers to an electronic device that is used to operate another device from a distance or wirelessly, such as through microwave signals with 2.4GHz ISM bands. In this regard, the remote-control device is used for controlling the movement of the cart. The movement includes a forward, a backward, a rotating, or a turning motion of the cart. The speed (v1) of that cart refers to the distance travelled by the cart in a unit of time. The SI unit for measuring the speed (v1) of the cart is meter per second (m/s). Optionally, the remote-control device is a tilt control device. The term *"tilt control device"* as used herein refers to an input device that pivots on a base and reports its angle or direction to the cart. In this regard, the tilt control device does not require buttons for controlling the angle or the direction of the cart. It will be appreciated that the tilt control device transmits instructions to the cart regarding the movement thereof by tilting the tilt control device in the desired manner. In an example, the tilt control device is moved into a sloping position in order to move or cause to move the cart into the sloping position by turning thereof. In embodiments, the remote-control device may be in different sizes. Different sizes may be configured to fit the remote-control device in a hand of a specific user.

The remote-control device comprises a transmitter and at least one sensor element operable to measure a distance (L) between the remote-control device and the cart. The term *"transmitter"* as used herein refers to an electronic component of the remote-control device and is used for transmitting a command in the form of signals to the receiver associated with the cart. Optionally, the command is transmitted in the form of a stream of pulses of infrared light. Optionally, the remote-control device includes a plurality of buttons. Optionally, the receiver in the cart recognizes the pattern and causes the cart to move accordingly. Optionally, the transmitter is a light-emitting diode (LED) that is built into the remote-control device. It will be appreciated that the remote-control device employs the transmitter for increasing the efficiency of the cart while transporting the items. In an example, the remote-control device is used to command the cart to be driven towards the shelf when the user requires to select heavy-weight items from a shelf of the store.

The remote-control device is operable to control the speed of the cart to keep the distance (L) within a range from 1 meter (m) up to 3 meters during the movement of the cart. In this regard, the remote-control device is a hand-held device that is used by the user in order to maintain an optimum distance between the remote-control device and the cart. It will be appreciated that the speed is selected based on the moving pace of the user controlling the remote-control device. Moreover, the range from 1 meter up to 3 meters prevents the user from stumbling on the cart when the distance is less than 1 metre. Additionally, the aforementioned range of the distance prevents the cart from hitting the pedestrian traffic, thereby allowing efficient control thereof. Optionally, the distance is in the range from 1.0 m, 1.5 m, 2.0 m, or 2.5 m up to 1.5 m, 2.0 m, 2.5 m or 3.0 m.

Optionally, the speed (v1) is controlled according to a speed (v2) of a user holding the remote-control device. In this regard, the remote-control device is used to manipulate the speed of the cart based on the user's speed. In an example, when the user holding the remote-control device starts moving faster, then the cart also drives faster or vice versa.

Optionally, the speed of the cart is controlled only via the remote-control device by the user. The user will select the speed, a driving movement and a stopping moment. The remote-control device is operable to control the speed of the cart by switching setting a maximum speed depending on the environment the cart is used. For example, the maximum speed may be different for using the cart indoors, outdoors, a shop, etc. Optionally, the remote-control device is operable to control the speed of the cart selected from at least 3 predefined maximum speeds. The maximum speeds are controllable by switch. Therefore, the user will always have complete control over the remote-controlled personal cart system and no separate legislation is necessary for using the remote-control device in various countries.

Optionally, the remote-control device comprises a joystick for controlling the movement and the speed (v1) of the cart. The joystick enables easier navigation of the cart. The remote-control device can be used with gloves and low temperatures without a risk of failure. Furthermore, the joystick provides fast and straight forward interaction between the remote-control device and the cart. Also, the user of the remote-controlled personal cart system can feel driving direction and speed more easily. The joystick ensures even better control over the remote-controlled personal cart system, as releasing the joystick would stop the cart immediately. Therefore, the remote-controlled personal cart system does not comprise an autonomous cart and no specific legislation is necessary for using it.

Optionally, the remote-control device is operable switch a driving direction between forward driving direction and a backwards driving direction of the cart on a click. Simple and quick switching of the driving direction being either forward or backward enables to easily manoeuvre out from tight spaces. For example, if the cart gets stuck in a corner or a tight space, the driving direction can be switched backwards, and the cart can easily reverse out. The switch on a click may be configured as a physical switch, for example as a button. In another embodiment, the switch on a click may be configured as a digital switch comprising a touch screen.

Optionally, the basket comprises a lid and wherein the lid can be opened and closed via the remote-control device. The term *"lid"* as used herein refers to a cover of a container that serves as a closure or a seal. In this regard, the lid is used to cover or close the basket completely. Optionally, the lid includes a security strip or a tamper-evident band to hold the lid on securely until the opening is desired or authorized. It will be appreciated that the lid protects the items stored in the basket. Moreover, the lid could be locked to avoid any losses or robbery of the items stored inside the basket. Optionally, the basket could also operate without the lid.

In an embodiment, the battery, the receiver, the at least one motor, and the at least one sensor system are waterproof. The waterproofness enables to use the remote-controlled personal cart system in a rainy, snowy or sloppy weather conditions. Furthermore, it is possible to use the remote-controlled personal cart system in a beach or by the pools.

Optionally, a basket of the remote-controlled personal cart system comprises lifting handle for lifting and/or carrying the basket. As the basket may be attachable, it is convenient to remove the basket and carry it from the lifting handle. In an embodiment, the lifting handles comprise of two lifting handles. For more comfortable lifting and carrying, the lifting handles may be made of leather or leather-like material.

### DETAILED DESCRIPTION OF DRAWINGS

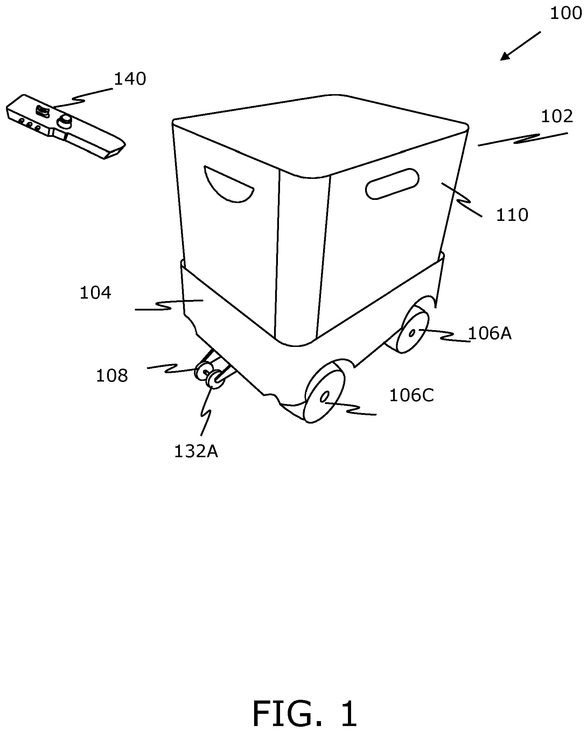

Referring to FIG 1 there is shown schematic illustrations of a remote-controlled personal cart system **100** for transporting items, in accordance with an embodiment of the present disclosure. The system **100** comprises a cart **102** and a remote-control device **140.** The cart **102** comprising a base **104** comprising at least four wheels **106A, 106B, 106C** and **106D.** As shown in FIG. 1A, the base (not shown) comprises at least two driving wheels such as a first driving wheel **106A** on the front and at least two back wheels such as a first back wheel **106C.** Moreover, the base comprises a back sliding system **108** that is configured to support the cart **102,** when driving on an uneven ground. Furthermore, the base comprises a basket **110** detachably placed on the base, the basket **110** comprises an empty space that is configured to accommodate the items.

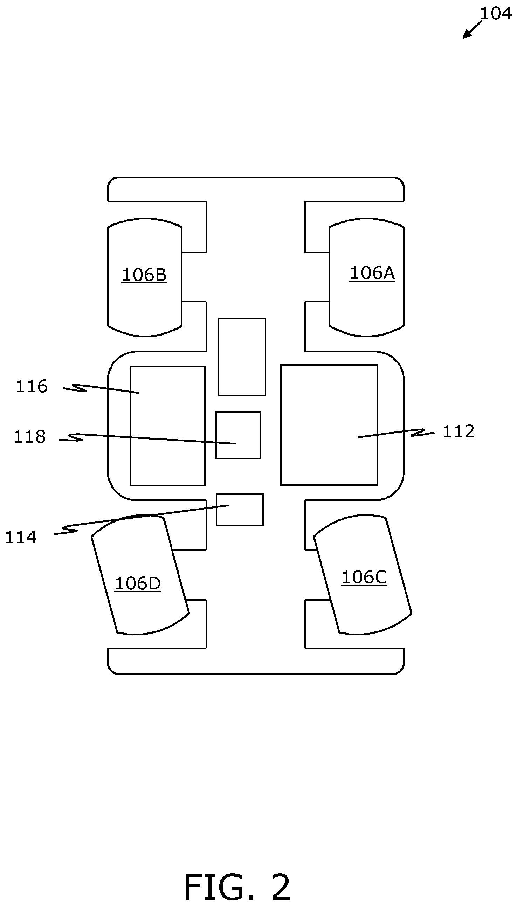

FIG 2 is a schematic illustration of a bottom view of a base **104** of a remote-controlled personal cart system for transporting items. As shown in FIG. 2, the base **104** comprises at least four wheels such as **106A, 106B, 106C** and **106D** comprising at least two driving wheels such as **106A** and **106B** on the front and at least two back wheels such as **106C** and **106D.** Moreover, the base **104** comprises a back sliding system **108** that is configured to support the cart (not shown), when driving on an uneven ground. Furthermore, the base **104** comprises a battery **112,** a receiver **114,** at least one motor **116,** and at least one sensor system **118** operable to detect obstacles.

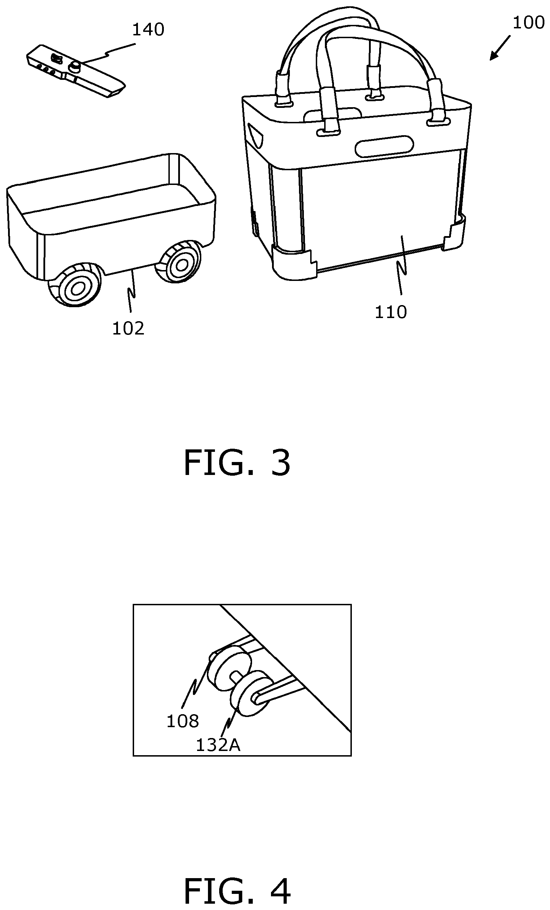

FIG 3 is a schematic illustration of a base **102** and a basket **110** of a remote-controlled personal cart system **100** for transporting items. On FIG 3, the basket **110** is detached from the base **102** based on an application thereof.

FIG 4 is a zoomed view of the back sliding system **108.** The back sliding system **108** comprises small wheels, which support the remote-controlled personal cart system, while driving.

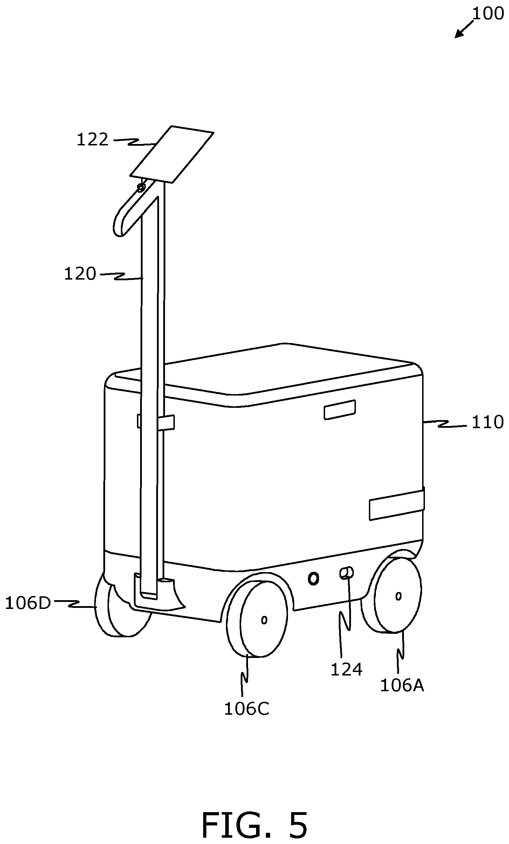

As shown on FIG 5, the basket **110** further comprises a handle **120** and a screen **122** operable to display an information about the detected objects (not shown). The remote-controlled personal cart system **100** further comprises a charging station **124** operable to charge a battery (not shown).

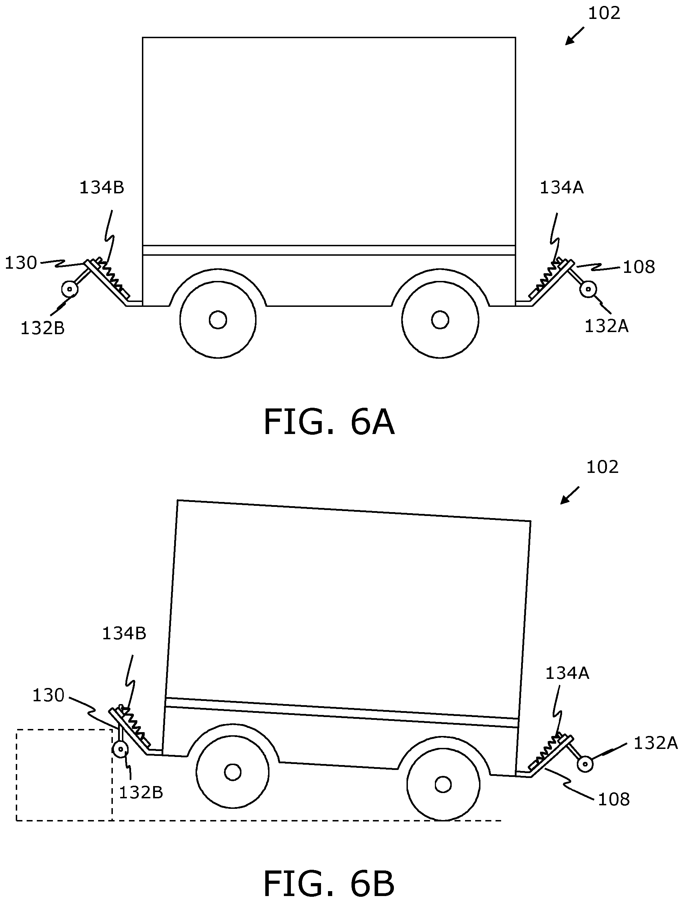

FIGs. 6A, 6B are side views of a cart **102** of a remote-controlled personal cart system for transporting items. The cart **102** comprises a back sliding system **108** with a sliding wheel **132A** and a front sliding system **130** with a sliding wheel **132B.** The back sliding system **108** and the front sliding system **130** comprise springs **134A, 134B** to enable retracting. As shown on FIG 6A, the cart **102** is driving on a smooth road. As shown on FIG 6B, the cart **102** is driving up down from a lower surface to an higher surface, the front-sliding system **130** retracts with a force applied from the higher surface and the back-sliding system **108** supports the cart no to fall over.

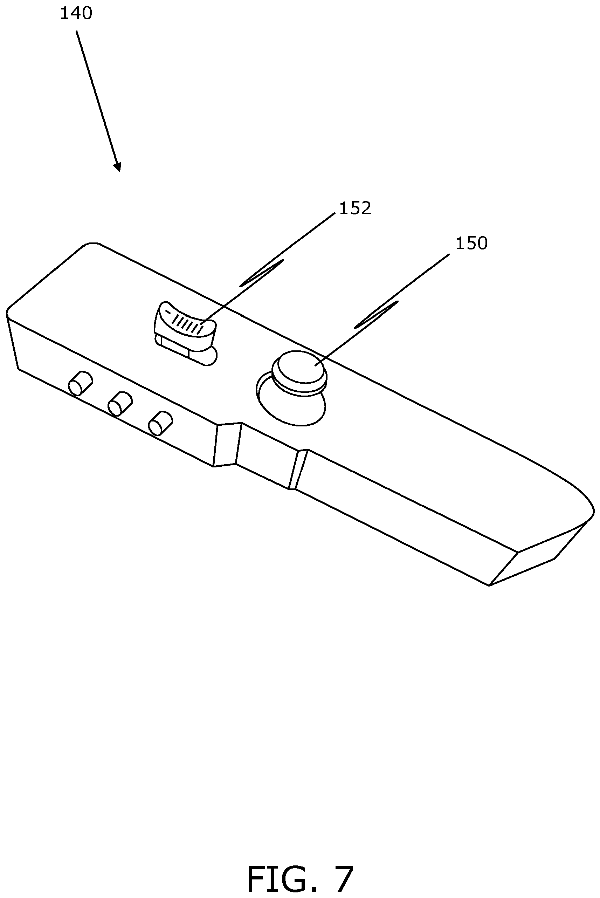

FIG 7 is a schematic illustration of a remote-control device **140** comprising a joystick **150** and a button **152** to switch a driving direction of the cart on a click.

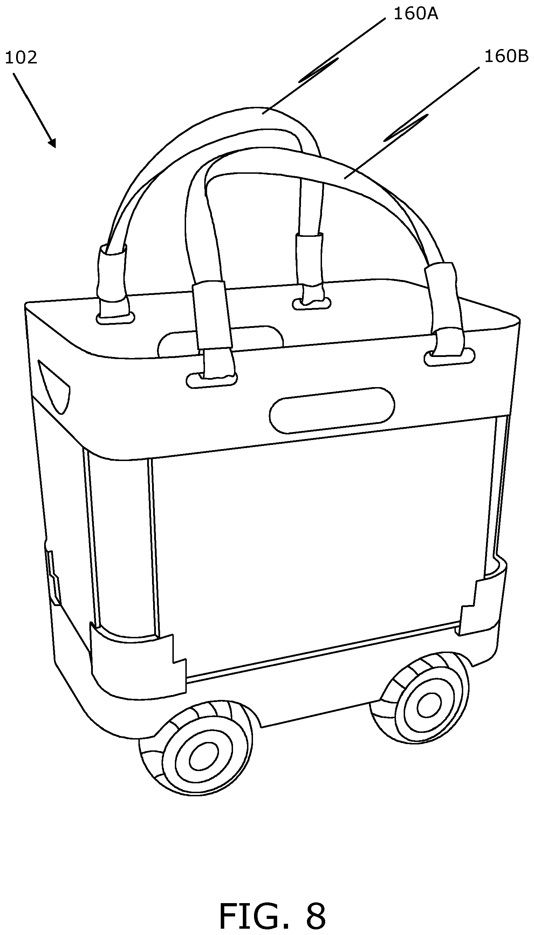

FIG 8 is a schematic illustrations of a cart **102** of remote-controlled personal cart system for transporting items with two lifting handles **160A, 160B;**

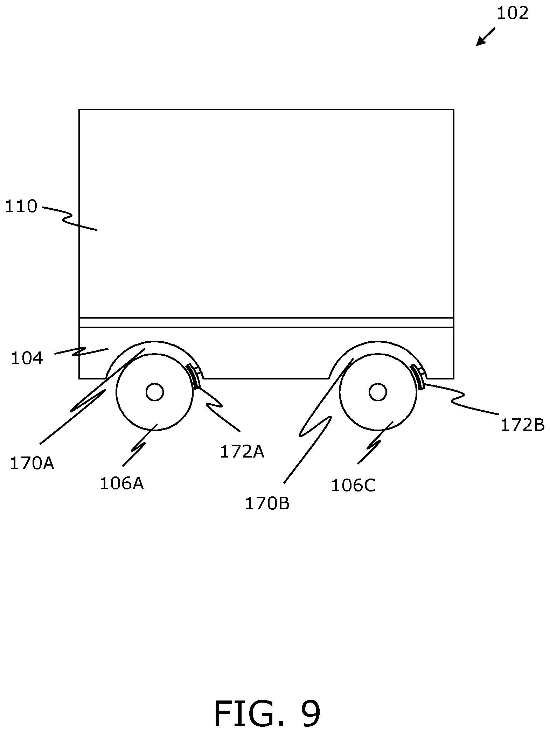

FIG 9 is a schematic illustrations of a cart **102** of a remote-controlled personal cart system. The cart **102** comprising a basket **110,** a base **104,** wheels **106A, 106C** at least partially located inside wheels wells **170A, 170B.** The wheels wells **170A, 170B** comprising one or more brushes **172A, 172B** for removing snow, dirt, mud, etc from the wheels.

## Claims

1. A remote-controlled personal cart system (100) for transporting items, the remote-controlled personal cart system comprising
- a cart (102) comprising
- a base (104) comprising
- at least four wheels (106A, 106B, 106C, 106D) comprising at least two driving wheels (106A, 106B) on the front and at least two back wheels (106C, 106D),
- a battery (112),
- a receiver (114),
- at least one motor (116), and
- at least one sensor system (118) operable to detect obstacles;
- a basket (110) detachably placed on the base, the basket comprising an empty space configured to accommodate the items; and
- a remote-control device (140) for controlling a movement and a speed (v1) of the cart, the remote-control device comprising a transmitter and at least one sensor element operable to measure a distance (L) between the remote-control device and the cart,
and wherein the remote-control device is operable to control the speed of the cart to keep the distance (L) within a range from 1 meter up to 3 meters during the movement of the cart,
**characterized in that** the cart further comprises a back sliding system (108) between the at least two back wheels, the sliding system being configured to support the cart, when driving on an uneven ground.

2. A remote-controlled personal cart system (100) according to claim 1 further comprising a detector attached to the basket (110), the detector being operable to detect the objects inside the basket, and/or the basket (110) further comprises a handle (120) and a screen (122) operable to display an information about the detected objects.

3. A remote-controlled personal cart system (100) according to any of the preceding claims further comprising a charging station (124) operable to charge the battery (206).

4. A remote-controlled personal cart system (100) according to any of the preceding claims, wherein a material of the base (104), the basket (110) and the remote-control device (140) comprises at least one of selected from aluminium, vegetable fibres.

5. A remote-controlled personal cart system (100) according to any of the preceding claims, wherein the cart (102) further comprises solar panels.

6. A remote-controlled personal cart system (100) according to any of the preceding claims, wherein the speed (v1) is controlled according to a speed (v2) of a user holding the remote-control device (140).

7. A remote-controlled personal cart system (100) according to any of the preceding claims, wherein the remote-control device (140) is selected from at least one of: a tilt control device, a joystick (150) for controlling the movement and the speed (v1) of the cart; and/or
wherein the remote-control device (140) is operable to switch a driving direction between forward driving direction and a backwards driving direction of the cart on a click.

8. A remote-controlled personal cart system (100) according to any of the preceding claims, wherein the basket (110) comprises a lid and wherein the lid can be opened and closed via the remote-control device, and/or the basket (110) is a collapsible basket.

9. A remote-controlled personal cart system (100) according to any of the preceding claims, wherein the at least one sensor system comprises at least one of selected from ToF (Time of Flight) sensor, RGB sensor, at least one lidar.

10. A remote-controlled personal cart system (100) according to any of the claims from 4 to 9, wherein the handle (120) is a retractable handle.

11. A remote-controlled personal cart system (100) according to any of the preceding claims, wherein the at least four wheels (106A, 106B, 106C, 106D) are exchangeable and/or the at least four wheels comprise a suspension system.

12. A remote-controlled personal cart system (100) according to any of the preceding claims further comprising a front sliding system (130) between the at least two driving wheels (106A, 106B), the front sliding system being configured to support the cart, when driving on an uneven ground.

13. A remote-controlled personal cart system (100) according to any of the preceding claims, wherein at least one of the back sliding system (108) and the front sliding system (130) comprises a sliding wheel (132A, 132B), which is smaller than the at least four wheels (106A, 106B, 106C, 106D),and/or at least one of the back sliding system (108) and the front sliding system (130) is configured to retract while the cart is climbing up from a lower surface to an higher surface to.

14. A remote-controlled personal cart system (100) according to any of the preceding claims, wherein the battery (112), the receiver (114), the at least one motor (116), and the at least one sensor system are waterproof.

15. A remote-controlled personal cart system (100) according to any of the preceding claims, wherein the at least four wheels (106A, 106B, 106C, 106D) are at least partially located inside wheels wells (170A, 170B) comprised in the base (104) and wherein the wheel wells comprise one or more brushes (172A, 172B) configured to clean the at least four wheels during the movement of the cart.

## Patentansprüche

1. Ferngesteuertes persönliches Wagensystem (100) zum Transportieren von Gegenständen, das ferngesteuerte persönliche Wagensystem umfassend
- einen Wagen (102), umfassend
- ein Gestell (104), umfassend
- mindestens vier Räder (106A, 106B, 106C, 106D), umfassend mindestens zwei Antriebsräder (106A, 106B) an der Vorderseite und mindestens zwei Hinterräder (106C, 106D),
- einen Akku (112),
- einen Empfänger (114),
- mindestens einen Motor (116), und
- mindestens ein Sensorsystem (118), das betriebsfähig ist, um Hindernisse zu erkennen;
- einen Korb (110), der auf der Basis abnehmbar platziert ist, der Korb umfassend einen Leerraum, der konfiguriert ist, um die Gegenstände aufzunehmen; und
- eine Fernsteuerungsvorrichtung (140) zum Steuern einer Bewegung und einer Geschwindigkeit (v1) des Wagens, die Fernsteuerungsvorrichtung umfassend einen Sender und mindestens ein Sensorelement, das betriebsfähig ist, um eine Entfernung (L) zwischen der Fernsteuerungsvorrichtung und dem Wagen zu messen,
und wobei die Fernsteuerungsvorrichtung betriebsfähig ist, um die Geschwindigkeit des Wagens zu steuern, um den Abstand (L) während der Bewegung des Wagens innerhalb eines Bereichs von 1 Meter bis zu 3 Metern zu halten,
**dadurch gekennzeichnet, dass** der Wagen ferner ein hinteres Schiebesystem (108) zwischen den mindestens zwei Hinterrädern umfasst, wobei das Schiebesystem konfiguriert ist, um den Wagen zu stützen, wenn er auf unebenem Boden fährt.

2. Ferngesteuertes persönliches Wagensystem (100) nach Anspruch 1, ferner umfassend einen Detektor, der an dem Korb (110) befestigt ist, wobei der Detektor betriebsfähig ist, um die Objekte innerhalb des Korbs zu erkennen, und/oder der Korb (110) ferner einen Griff (120) und einen Bildschirm (122) umfasst, der betriebsfähig ist, um eine Information über die erkannten Objekte anzuzeigen.

3. Ferngesteuertes persönliches Wagensystem (100) nach einem der vorstehenden Ansprüche, ferner umfassend eine Ladestation (124), die betriebsfähig ist, um den Akku (206) zu laden.

4. Ferngesteuertes persönliches Wagensystem (100) nach einem der vorstehenden Ansprüche, wobei ein Material des Gestells (104), des Korbs (110) und der Fernsteuerungsvorrichtung (140) mindestens eines umfasst, das aus Aluminium, Pflanzenfasern ausgewählt ist.

5. Ferngesteuertes persönliches Wagensystem (100) nach einem der vorstehenden Ansprüche, wobei der Wagen (102) ferner Solarmodule umfasst.

6. Ferngesteuertes persönliches Wagensystem (100) nach einem der vorstehenden Ansprüche, wobei die Geschwindigkeit (v1) gemäß einer Geschwindigkeit (v2) eines Benutzers gesteuert wird, der die Fernsteuerungsvorrichtung (140) hält.

7. Ferngesteuertes persönliches Wagensystem (100) nach einem der vorstehenden Ansprüche, wobei die Fernsteuerungsvorrichtung (140) aus mindestens einem ausgewählt ist von: einer Neigungssteuereinrichtung, einem Joystick (150) zum Steuern der Bewegung und der Geschwindigkeit (v1) des Wagens; und/oder
wobei die Fernsteuerungsvorrichtung (140) betriebsfähig ist, um eine Fahrtrichtung zwischen einer Vorwärtsfahrtrichtung und einer Rückwärtsfahrtrichtung des Wagens mit einem Klick zu wechseln.

8. Ferngesteuertes persönliches Wagensystem (100) nach einem der vorstehenden Ansprüche, wobei der Korb (110) einen Deckel aufweist und wobei der Deckel über die Fernsteuerungsvorrichtung geöffnet und geschlossen werden kann, und/oder der Korb (110) ein zusammenlegbarer Korb ist.

9. Ferngesteuertes persönliches Wagensystem (100) nach einem der vorstehenden Ansprüche, wobei das mindestens eine Sensorsystem mindestens eines umfasst, das aus ToF(Flugzeit)-Sensor, RGB-Sensor, mindestens einem Lidar ausgewählt ist.

10. Ferngesteuertes persönliches Wagensystem (100) nach einem der Ansprüche 4 bis 9, wobei der Griff (120) ein einziehbarer Griff ist.

11. Ferngesteuertes persönliches Wagensystem (100) nach einem der vorstehenden Ansprüche, wobei die mindestens vier Räder (106A, 106B, 106C, 106D) austauschbar sind, und/oder die mindestens vier Räder ein Aufhängungssystem umfassen.

12. Ferngesteuertes persönliches Wagensystem (100) nach einem der vorstehenden Ansprüche, ferner umfassend ein vorderes Schiebesystem (130) zwischen den mindestens zwei Antriebsrädern (106A, 106B), wobei das vordere Schiebesystem konfiguriert ist, um den Wagen zu stützen, wenn er auf unebenem Boden fährt.

13. Ferngesteuertes persönliches Wagensystem (100) nach einem der vorstehenden Ansprüche, wobei mindestens eines des hinteren Schiebesystems (108) und des vorderen Schiebesystems (130) ein Schieberad (132A, 132B) umfasst, dass kleiner als die mindestens vier Räder (106A, 106B, 106C, 106D) ist, und/oder mindestens eines des hinteren Schiebesystems (108) und des vorderen Schiebesystems (130) konfiguriert ist, um sich zurückzuziehen, während der Wagen von einer niedrigeren Oberfläche zu einer höheren Oberfläche hinaufklettert.

14. Ferngesteuertes persönliches Wagensystem (100) nach einem der vorstehenden Ansprüche, wobei der Akku (112), der Empfänger (114), der mindestens eine Motor (116) und das mindestens eine Sensorsystem wasserdicht sind.

15. Ferngesteuertes persönliches Wagensystem (100) nach einem der vorstehenden Ansprüche, wobei die mindestens vier Räder (106A, 106B, 106C, 106D) mindestens teilweise innerhalb von Radkästen (170A, 170B) angeordnet sind, die in dem Gestell (104) umfasst sind, und wobei die Radkästen eine oder mehrere Bürsten (172A, 172B) umfassen, die konfiguriert sind, um die mindestens vier Räder während der Bewegung des Wagens zu reinigen.

## Revendications

1. Système de chariot personnel télécommandé (100) permettant de transporter des articles, le système de chariot personnel télécommandé comprenant
- un chariot (102) comprenant
- une base (104) comprenant
- au moins quatre roues (106A, 106B, 106C, 106D) comprenant au moins deux roues motrices (106A, 106B) à l'avant et au moins deux roues arrière (106C, 106D),
- une batterie (112),
- un récepteur (114),
- au moins un moteur (116), et
- au moins un système de capteurs (118) pouvant détecter des obstacles ;
- un panier (110) placé de manière amovible sur la base, le panier comprenant un espace vide conçu pour accueillir les articles ; et
- un dispositif de commande à distance (140) permettant de commander un déplacement et une vitesse (v1) du chariot, le dispositif de commande à distance comprenant un émetteur et au moins un élément de capteur pouvant mesurer une distance (L) entre le dispositif de commande à distance et le chariot,
et dans lequel le dispositif de commande à distance peut commander la vitesse du chariot afin de maintenir la distance (L) dans une plage allant de 1 mètre à 3 mètres pendant le déplacement du chariot,
**caractérisé en ce que** le chariot comprend en outre un système de coulissement arrière (108) entre les au moins deux roues arrière, le système de coulissement étant conçu pour soutenir le chariot, lors de la conduite sur un sol irrégulier.

2. Système de chariot personnel télécommandé (100) selon la revendication 1, comprenant en outre un détecteur fixé au panier (110), le détecteur pouvant détecter les objets à l'intérieur du panier, et/ou le panier (110) comprend en outre une poignée (120) et un écran (122) pouvant afficher une information sur les objets détectés.

3. Système de chariot personnel télécommandé (100) selon l'une quelconque des revendications précédentes, comprenant en outre une station de charge (124) pouvant charger la batterie (206).

4. Système de chariot personnel télécommandé (100) selon l'une quelconque des revendications précédentes, dans lequel un matériau de la base (104), du panier (110) et du dispositif de commande à distance (140) comprend au moins l'un parmi de l'aluminium, des fibres végétales.

5. Système de chariot personnel télécommandé (100) selon l'une quelconque des revendications précédentes, dans lequel le chariot (102) comprend en outre des panneaux solaires.

6. Système de chariot personnel télécommandé (100) selon l'une quelconque des revendications précédentes, dans lequel la vitesse (v1) est commandée selon une vitesse (v2) d'un utilisateur tenant le dispositif de commande à distance (140).

7. Système de chariot personnel commandé à distance (100) selon l'une quelconque des revendications précédentes, dans lequel le dispositif de commande à distance (140) est choisi parmi au moins l'un parmi : un dispositif de commande d'inclinaison, un levier de commande (150) permettant de commander le mouvement et la vitesse (v1) du chariot ; et/ou
dans lequel le dispositif de commande à distance (140) peut changer un sens de conduite entre le sens de marche avant et un sens de conduite arrière du chariot en un clic.

8. Système de chariot personnel télécommandé (100) selon l'une quelconque des revendications précédentes, dans lequel le panier (110) comprend un couvercle et dans lequel le couvercle peut être ouvert et fermé par l'intermédiaire du dispositif de commande à distance, et/ou le panier (110) est un panier pliable.

9. Système de chariot personnel télécommandé (100) selon l'une quelconque des revendications précédentes, dans lequel l'au moins un système de capteurs comprend au moins l'un choisi parmi un capteur ToF (temps de vol), un capteur RVB, et au moins un lidar.

10. Système de chariot personnel télécommandé (100) selon l'une quelconque des revendications 4 à 9, dans lequel la poignée (120) est une poignée rétractable.

11. Système de chariot personnel télécommandé (100) selon l'une quelconque des revendications précédentes, dans lequel les au moins quatre roues (106A, 106B, 106C, 106D) sont interchangeables et/ou les au moins quatre roues comprennent un système de suspension.

12. Système de chariot personnel télécommandé (100) selon l'une quelconque des revendications précédentes, comprenant en outre un système de coulissement avant (130) entre les au moins deux roues motrices (106A, 106B), le système de coulissement avant étant conçu pour soutenir le chariot, lors de la conduite sur un sol irrégulier.

13. Système de chariot personnel télécommandé (100) selon l'une quelconque des revendications précédentes, dans lequel au moins l'un du système de coulissement arrière (108) et du système de coulissement avant (130) comprend une roue coulissante (132A, 132B), qui est plus petite que les au moins quatre roues (106A, 106B, 106C, 106D), et/ou au moins l'un du système de coulissement arrière (108) et du système de coulissement avant (130) est conçu pour se rétracter pendant que le chariot monte d'une surface inférieure à une surface supérieure.

14. Système de chariot personnel télécommandé (100) selon l'une quelconque des revendications précédentes, dans lequel la batterie (112), le récepteur (114), l'au moins un moteur (116), et l'au moins un système de capteurs sont étanches.

15. Système de chariot personnel télécommandé (100) selon l'une quelconque des revendications précédentes, dans lequel les au moins quatre roues (106A, 106B, 106C, 106D) sont au moins partiellement situées à l'intérieur de passages de roues (170A, 170B) compris dans la base (104) et dans lequel les passages de roue comprennent une ou plusieurs brosses (172A, 172B) conçues pour nettoyer les au moins quatre roues pendant le mouvement du chariot.
